# EUROPEAN PATENT APPLICATION

(11) **EP 3 961 323 A1**
(43) Date of publication of application: **02.03.2022**
(21) Application number: 20192544.3
(22) Date of filing: 25.08.2020
(51) Int. Cl.: G05B 19/418

(54) **REPLACEMENT OF INDUSTRIAL FIELD DEVICE**

(71) Applicant: ABB Schweiz AG, 5400 Baden (CH)
(72) Inventor: PLATENIUS-MOHR, Marie Christin, 69493 Hirschberg an der Bergstraße (DE); KOZIOLEK, Heiko, 76227 Karlsruhe (DE); BOLLMEYER, Stefan, 32425 Minden (DE); RUECKERT, Julius, 63225 Langen (DE); BURGER, Andreas, 76356 Weingarten (DE)
(74) Representative: Maiwald Patent- und Rechtsanwaltsgesellschaft mbH

(57) **Abstract**

The invention relates to an industrial field device replacement system, comprising:
- an input unit; and
- a processing unit;
wherein the input unit is configured to receive an identification of a specific device to be replaced, wherein the specific device is in a network of a plurality of devices, and wherein the input unit is configured to provide the identification of the specific device to the processing unit;
wherein prior to replacement of the specific device the processing unit is configured to determine one or more further devices of the plurality of devices that would be affected by replacement of the specific device, wherein the determination comprises utilization of the identification of the specific device; and
wherein prior to replacement of the specific device the processing unit is configured to change a mode of operation of the one or more further devices from a normal mode into a safe mode such that the one or more further devices will not be affected when the specific device is not available.

## Description

### FIELD OF THE INVENTION

The present invention relates to industrial field device replacement systems, methods of industrial field device replacement, and computer program elements.

### BACKGROUND OF THE INVENTION

The architecture of industrial plants is currently being changed from a controller-centric architecture (where each field device is directly connected to a controller) to a network-centric architecture (where many controllers and other devices subscribe to a device).

Such a network-centric architecture is more flexible and more scalable than a controller-centric architecture. However, the process of replacing a malfunctioning field device becomes more complex or replacing a device when a certain device lifetime is approaching can pose difficulties within a network-centric architecture.

When a device is replaced in a controller-centric architecture, the value provided by this device can be substituted temporarily by a simulated value on the controller side.

However, in a network-centric architecture, where a device operates under more complex data flow dependencies (e.g., from mobile apps or cloud services), device replacement is more complicated. Currently, whole plant segments have to be manually stopped, which leads to a long period of a reduced production or even production downtime.

In addition, the replacement of a field device implies a high effort for maintenance engineers to:
- establish a connection to the device in order to download its current configuration as it may have been altered using a local HMI;
- physically disconnect and remove the device to be replaced;
- check the placement of the new device;
- connect the cabling of the device;
- set up the connection to the network;
- upload the device's configuration.

All in all, the replacement is a tedious and error-prone process that requires substantial manual work, and can lead to reduced production or even production downtime There is a need to address these problems.

### SUMMARY OF THE INVENTION

Therefore, it would be advantageous to have an improved technique for industrial field device replacement.

The object of the present invention is solved with the subject matter of the independent claims, wherein further embodiments are incorporated in the dependent claims.

In a first aspect, there is provided an industrial field device replacement system, comprising:
- an input unit; and
- a processing unit;

The input unit is configured to receive an identification of a specific device to be replaced, wherein the specific device is in a network of a plurality of devices, and wherein the input unit is configured to provide the identification of the specific device to the processing unit. Prior to replacement of the specific device the processing unit is configured to determine one or more further devices of the plurality of devices that would be affected by replacement of the specific device. The determination comprises utilization of the identification of the specific device. Prior to replacement of the specific device the processing unit is configured to change a mode of operation of the one or more further devices from a normal mode into a safe mode such that the one or more further devices will not be affected when the specific device is not available (i.e., so that they do not issue error messages if the device to be replaced no longer provides data).

In an example, after the specific device has been replaced with a replacement device, the processing unit is configured to transfer a device configuration to the replacement device.

In an example, prior to replacement of the specific device the processing unit is configured to receive a device configuration from the specific device and configured to store the device configuration of the specific device. After the specific device has been replaced with the replacement device the device configuration transferred to the replacement device comprises the device configuration of the specific device.

In an example, the processing unit is configured to select a device configuration from a server. The selection comprises utilization of the identification of the specific device. After the specific device has been replaced with the replacement device the device configuration transferred to the replacement device comprises the device configuration selected from the server.

It is to be noted that a server can mean a hardware device, but a server can also mean a digital repository that can be hosted on a physical server or be a service provided as part of other infrastructure components. The "server" is therefore meant in a generic sense and can be any digital repository to strore/retrieve the device configuration data, and indeed could be located within the cloud.

In an example, after the specific device has been replaced with the replacement device the processing unit is configured to change the mode of operation of the one or more further devices from the safe mode to the normal mode.

In an example, prior to replacement of the specific device the processing unit is configured to receive one or more signals from the specific device to the one or more further devices. After the specific device has been replaced with the replacement device the processing unit is configured to compare one or more new signals output by the replacement device with the one or more signals from the specific device to the one or more further devices. The processing unit is configured to change the mode of operation of the one or more further devices from the safe mode to the normal mode based on a determination that the one or more new signals output by the replacement device match the one or more signals from the specific device to the one or more further devices.

In an example, the safe mode of operation of operation of the one or more further devices comprises the one or more further devices being set into one or more simulation modes.

In a second aspect, there is provided an industrial field device replacement system, comprising:
- an input unit; and
- a processing unit.

The input unit is configured to receive an identification of a specific device to be replaced. The specific device is in a network of a plurality of devices. The input unit is configured to provide the identification of the specific device to the processing unit. Prior to replacement of the specific device the processing unit is configured to a select a simulation of the specific device to be implemented. The selection comprises utilization of the identification of the specific device.

In an example, after the specific device has been replaced with a replacement device, the processing unit is configured to transfer a device configuration to the replacement device.

In an example, the device configuration transferred to the replacement device is a device configuration utilized within the simulation of the specific device.

In an example, prior to replacement of the specific device the processing unit is configured to receive a device configuration from the specific device. The simulation of the specific device is configured to utilize the device configuration received from the specific device.

In an example, the processing unit is configured to select a device configuration from a server. The selection comprises utilization of the identification of the specific device. The simulation of the specific device is configured to utilize the device configuration selected from the server.

Again, here a "server" is meant in a generic sense and can be any digital repository to strore/retrieve the device configuration data, and indeed could be located within the cloud.

In an example, the processing unit is configured to select the simulation of the specific device from a plurality of simulations stored in a registry.

In an example, the processing unit is configured to run the simulation of the specific device.

In an example, the processing unit is configured to instruct a further processing unit to run the simulation of the specific device.

In an example, the processing unit or the further processing unit is configured to send at least one simulated value to one or more of the plurality of devices.

In a third aspect, there is provided a method of industrial field device replacement, comprising:
- receiving an identification of a specific device to be replaced, wherein the specific device is in a network of a plurality of devices;
- prior to replacement of the specific device determining one or more further devices of the plurality of devices that would be affected by replacement of the specific device, wherein the determining comprises utilizing the identification of the specific device; and
- prior to replacement of the specific device changing a mode of operation of the one or more further devices from a normal mode into a safe mode such that the one or more further devices will not be affected when the specific device is not available.

In a fourth aspect, there is provided a method of industrial field device replacement, comprising:
- receiving an identification of a specific device to be replaced, wherein the specific device is in a network of a plurality of devices; and
- prior to replacement of the specific device selecting a simulation of the specific device to be implemented, and wherein the selecting comprises utilizing the identification of the specific device.

In a fifth aspect, there is provided a computer program element for controlling a system according to the first aspect, which when executed by a processor is configured to carry out the method of the third aspect.

In a sixth aspect, there is provided a computer program element for controlling a system according to the second aspect, which when executed by a processor is configured to carry out the method of the fourth aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawing:
Fig. 1 shows an examples of a device replacement systems (or services); and
Fig. 2 shows examples of detailed workflows for the two device replacement systems (or services) of Fig. 1.

### DETAILED DESCRIPTION OF EMBODIMENTS

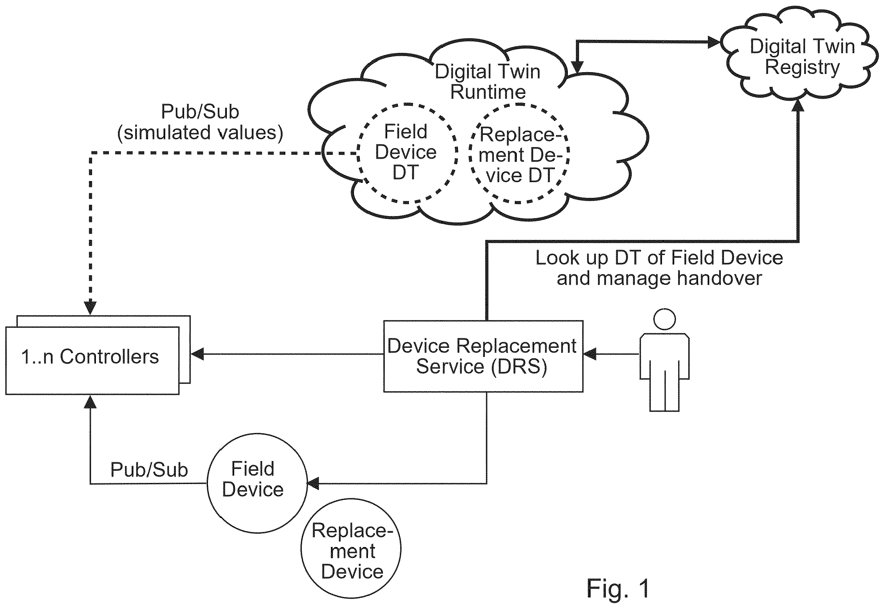

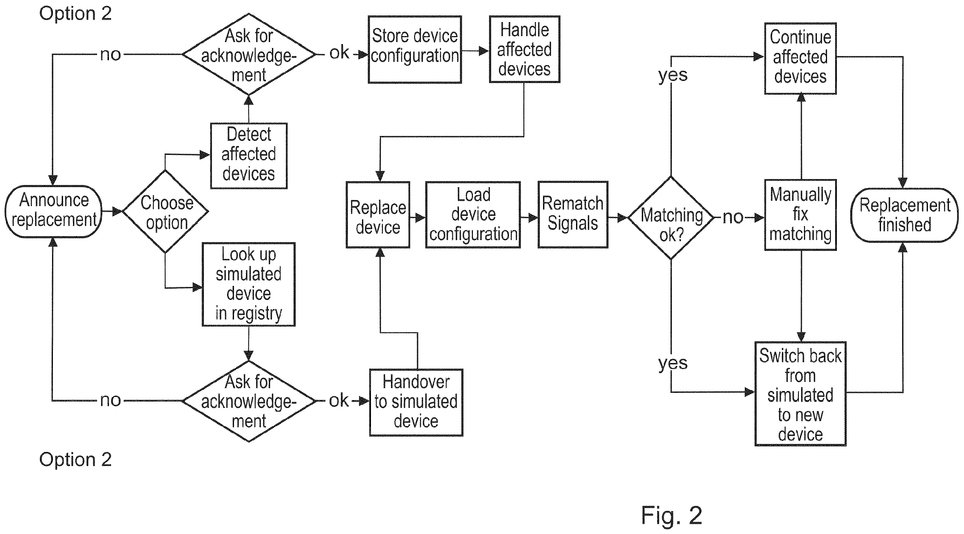

Figs. 1-2 relate to systems and methods of industrial device replacement.

An example of the industrial field device replacement system comprises:
- an input unit; and
- a processing unit.

The input unit is configured to receive an identification of a specific device to be replaced. The specific device is in a network of a plurality of devices. The input unit is configured to provide the identification of the specific device to the processing unit. Prior to replacement of the specific device the processing unit is configured to determine one or more further devices of the plurality of devices that would be affected by replacement of the specific device. The determination of the one or more further devices of the plurality of devices that would be affected by replacement of the specific device comprises utilization of the identification of the specific device. Prior to replacement of the specific device the processing unit is configured to change a mode of operation of the one or more further devices from a normal mode into a safe mode such that the one or more further devices will not be affected when the specific device is not available.

The processing unit can also be considered to be acting as an output unit, it that it can send information and values as required. This is explained in more detail below,

According to an example, after the specific device has been replaced with a replacement device, the processing unit is configured to transfer a device configuration to the replacement device.

According to an example, prior to replacement of the specific device the processing unit is configured to receive a device configuration from the specific device and configured to store the device configuration of the specific device. After the specific device has been replaced with the replacement device, the device configuration transferred to the replacement device comprises the device configuration of the specific device.

According to an example, the processing unit is configured to select a device configuration from a server. The selection comprises utilization of the identification of the specific device. After the specific device has been replaced with the replacement device, the device configuration transferred to the replacement device comprises the device configuration selected from the server.

According to an example, after the specific device has been replaced with the replacement device the processing unit is configured to change the mode of operation of the one or more further devices from the safe mode to the normal mode.

According to an example, prior to replacement of the specific device the processing unit is configured to receive one or more signals from the specific device to the one or more further devices. After the specific device has been replaced with the replacement device the processing unit is configured to compare one or more new signals output by the replacement device with the one or more signals from the specific device to the one or more further devices. The processing unit is configured to change the mode of operation of the one or more further devices from the safe mode to the normal mode based on a determination that the one or more new signals output by the replacement device match the one or more signals from the specific device to the one or more further devices.

According to an example, the safe mode of operation of operation of the one or more further devices comprises the one or more further devices being set into one or more simulation modes.

An example of the industrial field device replacement system comprises:
- an input unit; and
- a processing unit.

The input unit is configured to receive an identification of a specific device to be replaced. The specific device is in a network of a plurality of devices. The input unit is configured to provide the identification of the specific device to the processing unit. Prior to replacement of the specific device the processing unit is configured to a select a simulation of the specific device to be implemented. The selection of the simulation of the specific device to be implemented comprises utilization of the identification of the specific device.

Again, the processing unit can also be considered to be acting as an output unit, it that it can send information and values as required,
According to an example, after the specific device has been replaced with a replacement device, the processing unit is configured to transfer a device configuration to the replacement device.

According to an example, the device configuration transferred to the replacement device is a device configuration utilized within the simulation of the specific device.

According to an example, prior to replacement of the specific device the processing unit is configured to receive a device configuration from the specific device. The simulation of the specific device is configured to utilize the device configuration received from the specific device.

According to an example, the processing unit is configured to select a device configuration from a server. The selection comprises utilization of the identification of the specific device. The simulation of the specific device is configured to utilize the device configuration selected from the server.

According to an example, the processing unit is configured to select the simulation of the specific device from a plurality of simulations stored in a registry.

According to an example, the processing unit is configured to run the simulation of the specific device.

According to an example, the processing unit is configured to instruct a further processing unit to run the simulation of the specific device.

According to an example, the processing unit or the further processing unit is configured to send at least one simulated value to one or more of the plurality of devices.

Thus the result is that the output values of the simulation are sent to devices that would otherwise receive the values by the device to be replaced, and therefore there will not be any error indication through a lack of receipt of values that would have been received by the device to be replaced.

An example of the method of industrial field device replacement comprises:
- receiving an identification of a specific device to be replaced, wherein the specific device is in a network of a plurality of devices;
- prior to replacement of the specific device determining one or more further devices of the plurality of devices that would be affected by replacement of the specific device, wherein the determining comprises utilizing the identification of the specific device; and
- prior to replacement of the specific device changing a mode of operation of the one or more further devices from a normal mode into a safe mode such that the one or more further devices will not be affected when the specific device is not available.

In an example, the method comprises after the specific device has been replaced with a replacement device, transferring a device configuration to the replacement device.

In an example, the method comprises prior to replacement of the specific device, receiving a device configuration from the specific device and storing the device configuration of the specific device. After the specific device has been replaced with the replacement device the device configuration transferred to the replacement device comprises the device configuration of the specific device.

In an example, the method comprises selecting a device configuration from a server. The selecting comprises utilizing the identification of the specific device. After the specific device has been replaced with the replacement device the device configuration transferred to the replacement device comprises the device configuration selected from the server.

In an example, the method comprises after the specific device has been replaced with the replacement device changing the mode of operation of the one or more further devices from the safe mode to the normal mode.

In an example, the method comprises prior to replacement of the specific device, receiving one or more signals from the specific device to the one or more further devices. After the specific device has been replaced with the replacement device, the method comprises comparing one or more new signals output by the replacement device with the one or more signals from the specific device to the one or more further devices. Changing the mode of operation of the one or more further devices from the safe mode to the normal mode is then based on determining that the one or more new signals output by the replacement device match the one or more signals from the specific device to the one or more further devices.

In an example, wherein the safe mode of operation of the one or more further devices comprises the one or more further devices being set into one or more simulation modes.

An example of the method of industrial field device replacement comprises:
- receiving an identification of a specific device to be replaced, wherein the specific device is in a network of a plurality of devices; and
- prior to replacement of the specific device selecting a simulation of the specific device to be implemented, and wherein the selecting comprises utilizing the identification of the specific device.

In an example, the method comprises after the specific device has been replaced with a replacement device, transferring a device configuration to the replacement device.

In an example, wherein the device configuration transferred to the replacement device is a device configuration utilized within the simulation of the specific device.

In an example, the method comprises prior to replacement of the specific device, receiving a device configuration from the specific device. The simulation of the specific device is configured to utilize the device configuration received from the specific device.

In an example, the method comprises selecting a device configuration from a server. The selecting comprises utilizing the identification of the specific device. The simulation of the specific device is configured to utilize the device configuration selected from the server.

In an example, the method comprises selecting the simulation of the specific device from a plurality of simulations stored in a registry.

In an example, the method comprises running the simulation of the specific device.

In an example, the method comprises sending at least one simulated value from the simulation of the specific device to one or more of the plurality of devices.

A computer program element can then be used for controlling one of the above exemplar systems, which when executed by a processor is configured to carry out one of the above described methods.

In an example, there is provided a computer readable medium having stored the program element.

Thus previously replacing a malfunctioning field device, or just replacing a field device when a lifetime of the device is approaching for example, in an industrial plant would have required stopping parts of the production process, which may lead to a long period of production downtime. Furthermore, the previously such a replacement process was a tedious and error-prone process, done in most situations manually by a maintenance engineer. However, a device replacement system or service (DRS), that can be embodied as software, automates many of the steps for the device replacement that have had to be done manually before. It either identifies the devices affected by the replacement and thereby enables a more fine-grained disabling of the affected devices, or it hands over to a simulated device during the replacement, allowing continuing the production in for example a reduced mode (at least for noncritical devices). As a benefit, the production downtime of industrial plants in maintenance cases is decreased, limits the parts of the plant needing to be disabled is limited, and the maintenance engineer's manual work load is reduced.

Thus, the new technology supports the engineer in an optimal way. It takes into account affected devices and does allows for upcoming technology changes coming with a network-centric architecture, e.g., communication via OPC UA pub/sub and integration of Digital Twins.

Specific embodiments of the systems and methods of field device replacement, i.e. such a DRS, are now described in detail, where again reference if made to Figs. 1-2.

In order to improve the device replacement scenario, a device replacement system or service (DRS) has been developed, that utilizes specially written software. The DRS automates many of the steps for the device replacement that have had to be done manually before. In particular, it takes into account the devices affected by the replacement of a device.

The DRS supports two alternative operation modes:
a) Storing the device configuration, detecting affected devices and setting them into a simulation mode during the replacement process, restoring the device configuration afterwards; and
b) Integrating of a software-based simulation model of the device which includes the configuration and also historic values of the device to be replaced, which enables it to temporarily take over the tasks of the device - without any consequences for affected devices.

The maintenance engineer can decide between these two options, e.g., based on the expected number of affected devices:
If potentially many devices are affected, Option b) can be more appropriate because it can minimize the consequences for these devices. However, Option b) can require a comprehensive simulation model with information derived from different lifecycle phases to be available as well as a communication model which allows seamless takeover, e.g., Publish/Subscribe via IP Multicast.

The DRS decreases the production downtime of industrial plants in maintenance cases as it either allows a fine-grained shut-down of affected devices - at least for the replacement of non-critical devices - or makes a shutdown completely unnecessary. It also supports the maintenance engineer in general by lowering the manual effort for the device replacement.

How the cornerstones of the process (detecting affected devices, restoring device configurations, overtaking the device to be replaced by a simulation) can be realized is described in specific detail below.

As shown in the flow chart in Figs. 1-2, the low-intrusive device replacement process starts with the maintenance engineer announcing the replacement of a device via the user interface of the DRS.

For Option 1, the DRS thereupon detects devices affected by the replacement and shows them to the engineer. This is done using IGMP queries. If the engineer approves the replacement based on the list, the DRS stores the device configuration and sends the affected devices into a simulation mode or another mode that assures that the device unavailability is not harmful. After the device has been (physically) replaced, the configuration of the old device is transferred to the new device and the new device's signals are matched. Automated signal matching works based on a comparison of the signal references from the device to those encoded in the controller. If the engineer acknowledges the found matches, the affected devices are set to normal operation mode and the replacement process is finished.

For Option 2, a simulated device is looked up in a registry and the DRS manages the handover to the simulated device before the real device is replaced. Using a software-based simulation model of the device that also stores configuration parameters can be instrumental in testing the replacement in a virtual commissioning simulation. Using such a "Digital Twin", the configuration of a device can be retrieved based on the data known from the engineering phase stored within the digital twin running in the cloud or on an loT edge. When replacing the real device with the simulation model, i.e., its digital twin, at runtime, the publishing of the values are transferred seamlessly from the real device to the simulated device and - after replacement - back from the simulated device to the new replacement device. The other steps, i.e., loading the device configuration and re-matching the signals, work similarly as in Option 1.

Functionality of the processing unit, and be understood with respect to the followed exemplar operational cases taken in combination with Fig. 1. The processing unit acting as an output unit can be for:
Case a): sending the information to the other connected devices for setting them into a safe operational mode and for resetting this mode.
Case b): sending the simulated process values to the other affected devices continuously. The output path for case b) is shown in the drawing Fig. 1 [as the arrow between the digital twin and controllers].

For case b) process values can be sent to the other devices by Pub/Sub, whilst for case a) to set the other devices into a safe operation mode this can also be done by Client/Server (in case of OPC-UA).

The following provides specific details on operational characteristics of the DRS.

### Detect affected devices:

One mechanism to detect the devices affected by a device replacement is to use network information to detect the set of devices affected by the replacement of another device. For example, signals can be published by the device based on OPC UA UDP using IP multicast. Thus, this requires determining all members of multicast groups that the device publishes its signal to. IP multicast avoids building up a centralized view on all receivers. Thus, the DRS relies on the Internet Group Management Protocol (IGMP), which implements a request-response mechanism in that an IGMP Querier requests membership reports from hosts in the local network. Subscribers answer with respective membership reports used by routers and switches to dynamically configure the multicast forwarding/filtering.

Therefore, to determine affected devices, the DRS implements an IGMP monitor that listens to all IGMP reports within the subnet during the replacement process.

### Restore device configuration:

The DRS automatically downloads the device's configuration, stores it, and transfers it to the replacement device. For this, both devices use similar parameters or an appropriate mapping between parameter sets is available.

Downloading the device configuration is straightforward if the device to be replaced is still running and it is to be replaced because it is expected to start malfunctioning in the future, e.g., identified by predictive maintenance.

If the device has already stopped working, alternative sources for the device configuration could be identified, e.g., an engineering server.

### Handover to a Digital Twin:

For realizing Option 2, as shown in Figs. 1-2, the DRS can be connected to a Digital Twin Registry, deployed on the cloud or on an loT edge. The registry manages the digital twin (DT), i.e., a simulation model, of various field devices in a production plant and allows the DRS to look up the digital twin of a certain device.

A digital twin contains not only operational data of its corresponding device, but all data from its lifecycle, e.g., engineering data which has been downloaded from an engineering server. If the original configuration from the engineering phase has been modified, the DRS uploads a new backup of the current device configuration to the digital twin. The digital twin registry also collaborates with a Digital Twin Runtime, also deployed in the cloud or on an loT edge, where the simulation models are executed, i.e., where a simulation of a field device is performed.

When using a simulated device during the replacement of a physical device, the other connected devices are not affected by the replacement at all, if it can be ensured that the simulation is sufficiently adequate, i.e., that it has no further consequences for the devices that the sent data is only simulated. This can be realized by OPC UA Pub/Sub via IP multicast: Both the devices and their digital twins have corresponding OPC UA servers running and a handover between the publishing of the values from a real device to its digital twin publishing the values instead just means a new OPC UA server starts publishing on the same multicast group as the old OPC UA server. The subscribers to these values can be an arbitrary number of controllers.

For the switch between the real device and its digital twin to be fast and secure at the same time, the DRS and the digital twin registry have already managed the exchange of certificates between publishers and subscribers during the registration of each digital twin. After the replacement is finished, the DRS also manages the handover back from the digital twin of the replaced device to the new device.

A high quality of the simulation, i.e., appropriate and realistic simulated values, can be achieved by leveraging the various data that the digital twin keeps of different lifecycle phases of its device. During the handover, also the device configuration of the old device can be downloaded via the digital twin to the replacement device.

All in all, using this option, the discovery and handling of devices affected by a device replacement can be avoided, while still a minimal-invasive replacement with low impact on the whole production plant can be performed.

While the invention has been illustrated and described in detail in the drawing and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. An industrial field device replacement system, comprising:
- an input unit; and
- a processing unit;
wherein the input unit is configured to receive an identification of a specific device to be replaced, wherein the specific device is in a network of a plurality of devices, and wherein the input unit is configured to provide the identification of the specific device to the processing unit;
wherein prior to replacement of the specific device the processing unit is configured to determine one or more further devices of the plurality of devices that would be affected by replacement of the specific device, wherein the determination comprises utilization of the identification of the specific device; and
wherein prior to replacement of the specific device the processing unit is configured to change a mode of operation of the one or more further devices from a normal mode into a safe mode such that the one or more further devices will not be affected when the specific device is not available.

2. System according to claim 1, wherein after the specific device has been replaced with a replacement device, the processing unit is configured to transfer a device configuration to the replacement device.

3. System according to claim 2, wherein prior to replacement of the specific device the processing unit is configured to receive a device configuration from the specific device and configured to store the device configuration of the specific device, and wherein after the specific device has been replaced with the replacement device the device configuration transferred to the replacement device comprises the device configuration of the specific device.

4. System according to claim 2, wherein the processing unit is configured to select a device configuration from a server, wherein the selection comprises utilization of the identification of the specific device, and wherein after the specific device has been replaced with the replacement device the device configuration transferred to the replacement device comprises the device configuration selected from the server.

5. System according to any of claims 1-4, wherein after the specific device has been replaced with the replacement device the processing unit is configured to change the mode of operation of the one or more further devices from the safe mode to the normal mode.

6. System according to claim 5, wherein prior to replacement of the specific device the processing unit is configured to receive one or more signals from the specific device to the one or more further devices, and wherein after the specific device has been replaced with the replacement device the processing unit is configured to compare one or more new signals output by the replacement device with the one or more signals from the specific device to the one or more further devices and wherein the processing unit is configured to change the mode of operation of the one or more further devices from the safe mode to the normal mode based on a determination that the one or more new signals output by the replacement device match the one or more signals from the specific device to the one or more further devices.

7. System according to any of claims 1-6, wherein the safe mode of operation of operation of the one or more further devices comprises the one or more further devices being set into one or more simulation modes.

8. An industrial field device replacement system, comprising:
- an input unit; and
- a processing unit;
wherein the input unit is configured to receive an identification of a specific device to be replaced, wherein the specific device is in a network of a plurality of devices, and wherein the input unit is configured to provide the identification of the specific device to the processing unit; and
wherein prior to replacement of the specific device the processing unit is configured to select a simulation of the specific device to be implemented, and wherein the selection comprises utilization of the identification of the specific device.

9. System according to claim 8, wherein after the specific device has been replaced with a replacement device, the processing unit is configured to transfer a device configuration to the replacement device.

10. System according to claim 9, wherein the device configuration transferred to the replacement device is a device configuration utilized within the simulation of the specific device.

11. System according to any of claims 9-10, wherein prior to replacement of the specific device the processing unit is configured to receive a device configuration from the specific device, and wherein the simulation of the specific device is configured to utilize the device configuration received from the specific device.

12. System according to any of claims 9-10, wherein the processing unit is configured to select a device configuration from a server, wherein the selection comprises utilization of the identification of the specific device, and wherein the simulation of the specific device is configured to utilize the device configuration selected from the server.

13. System according to any of claims 8-12, wherein the processing unit is configured to select the simulation of the specific device from a plurality of simulations stored in a registry.

14. System according to any of claims 8-13, wherein the processing unit is configured to run the simulation of the specific device.

15. System according to any of claims 8-14, wherein the processing unit is configured to instruct a further processing unit to run the simulation of the specific device.

16. System according to claim 14 or claim 15, wherein the processing unit or the further processing unit is configured to send at least one simulated value to one or more of the plurality of devices

17. A method of industrial field device replacement, comprising:
- receiving an identification of a specific device to be replaced, wherein the specific device is in a network of a plurality of devices;
- prior to replacement of the specific device determining one or more further devices of the plurality of devices that would be affected by replacement of the specific device, wherein the determining comprises utilizing the identification of the specific device; and
- prior to replacement of the specific device changing a mode of operation of the one or more further devices from a normal mode into a safe mode such that the one or more further devices will not be affected when the specific device is not available.

18. A method of industrial field device replacement, comprising:
- receiving an identification of a specific device to be replaced, wherein the specific device is in a network of a plurality of devices; and
- prior to replacement of the specific device selecting a simulation of the specific device to be implemented, and wherein the selecting comprises utilizing the identification of the specific device.

19. A computer program element for controlling a system according to one of claims 1 to 7, which when executed by a processor is configured to carry out the method of claim 17.

20. A computer program element for controlling a system according to one of claims 8 to 16, which when executed by a processor is configured to carry out the method of claim 18.
